# EUROPEAN PATENT APPLICATION

(11) **EP 3 901 478 A1**
(43) Date of publication of application: **27.10.2021**
(21) Application number: 19900228.8
(22) Date of filing: 20.12.2019
(51) Int. Cl.: F16C 27/02

(54) **THRUST FOIL BEARING**

(30) Priority: 20.12.2018 JP 2018238856
(71) Applicant: IHI Corporation, Koto-ku Tokyo 135-8710 (JP)
(72) Inventor: OMORI Naomichi, Tokyo 135-8710 (JP)
(74) Representative: TBK
(86) International application number: PCT/JP2019/050016
(87) International publication number: WO 2020/130124

(57) **Abstract**

A thrust foil bearing (3) includes: a base plate (30) provided with an insertion hole (30a) through which a shaft (1) is inserted; and a top foil (10) disposed around the insertion hole (30a), wherein the top foil (10) includes a plurality of top foil pieces (11) arranged in a multiple ring shape around the insertion hole (30a).

## Description

### [Technical Field]

The present disclosure relates to a thrust foil bearing. Priority is claimed on Japanese Patent Application No. 2018-238856, filed December 20, 2018, the content of which is incorporated herein by reference.

### [Background Art]

Conventionally, as a bearing for a high-speed rotating body, a thrust foil bearing disposed to face a thrust collar provided on a rotation shaft is known (for example, see Patent Document 1 below). The thrust foil bearing is formed of a flexible foil (i.e., thin metal plate) on a bearing surface to absorb movement of the rotation shaft (i.e., axial displacement and inclination of the thrust collar) generated by vibration or impact, and has a foil structure under the bearing surface to flexibly support the bearing surface.

As such a thrust foil bearing, there is a form in which a plurality of top foil pieces and back foil pieces are arranged in a circumferential direction. The top foil pieces are supported by the back foil pieces and a lubricating fluid is introduced between the top foil pieces and the thrust collar with a rotation of the thrust collar. This lubricating fluid forms a wedge-shaped fluid lubricating film between the top foil pieces and the thrust collar, and a load capacity of the thrust foil bearing is exhibited.

### [Citation List]

### [Patent Document]

[Patent Document 1] International Publication No. 2014/061698

### [Summary of Invention]

### [Technical Problem]

In such a thrust foil bearing, it is required to further improve a load capacity.

The present disclosure has been made in view of the above-described problems, and an object of the present invention is to improve a load capacity of a thrust foil bearing.

### [Solution to Problem]

In order to solve the above-described problems, as a thrust foil bearing of a first aspect of the present disclosure, a thrust foil bearing including: a base plate provided with an insertion hole through which a shaft is inserted; and a top foil disposed around the insertion hole, wherein the top foil includes a plurality of top foil pieces arranged in multiple ring shapes around the insertion hole is adopted.

According to the thrust foil bearing of a second aspect of the present disclosure, in the first aspect, the number of outer peripheral top foil pieces among the plurality of top foil pieces may be larger than the number of inner peripheral top foil pieces among the plurality of top foil pieces, the outer peripheral top foil pieces arranged on an outer peripheral side in a radial direction of the insertion hole, and the inner peripheral top foil pieces arranged on an inner peripheral side in the radial direction of the insertion hole.

According to the thrust foil bearing of a third aspect of the present disclosure, in the first aspect or the second aspect, an inner peripheral circumferential gap extending in the radial direction may be formed between each of the inner peripheral top foil pieces among the plurality of top foil pieces, the inner peripheral top foil pieces arranged on the inner peripheral side in the radial direction of the insertion hole. At least one inner peripheral circumferential gap may be disposed at a circumferential position between both ends of the outer peripheral top foil piece disposed on the outer peripheral side, the both ends in a circumferential direction of the insertion hole.

According to the thrust foil bearing of a fourth aspect of the present disclosure, in any one of the first aspect to the third aspect, the inner peripheral circumferential gap extending in the radial direction may be formed between each of the inner peripheral top foil pieces among the plurality of top foil pieces, the inner peripheral top foil pieces arranged on the inner peripheral side in the radial direction of the insertion hole. An outer peripheral circumferential gap extending in the radial direction may be formed between each of the outer peripheral top foil pieces among the plurality of top foil pieces, the outer peripheral top foil pieces arranged on the outer peripheral side in the radial direction of the insertion hole. At least one outer peripheral circumferential gap may be located at a circumferential position matching the inner peripheral circumferential gap.

According to the thrust foil bearing of a fifth aspect of the present disclosure, in any one of the first aspect to the fourth aspect, a step may be provided between a support surface on the outer peripheral side of the base plate and on which the outer peripheral top foil pieces among the plurality of top foil pieces are disposed, the outer peripheral top foil pieces disposed on the outer peripheral side in the radial direction of the insertion hole, and a support surface on the inner peripheral side of the base plate and on which the inner peripheral top foil pieces among the plurality of top foil pieces are disposed, and the inner peripheral top foil pieces disposed on the inner peripheral side in the radial direction of the insertion hole.

### [Advantageous Effects of Invention]

According to the present disclosure, it is possible to improve the load capacity of the thrust foil bearing.

### [Brief Description of Drawings]

FIG. 1 is a side view showing an example of a turbomachine to which a thrust foil bearing of the present disclosure is applied.
FIG. 2 is a side view showing the thrust foil bearing of the present disclosure.
FIG. 3 is a plan view showing a thrust foil bearing according to a first embodiment of the present disclosure.
FIG. 4 is a view of A-A shown in FIG. 3.
FIG. 5 is an analysis diagram showing a pressure distribution of fluid lubricating films acting on top foil pieces that are not arranged in multiple ring shapes.
FIG. 6 is a plan view showing a thrust foil bearing according to a second embodiment of the present disclosure.
FIG. 7 is a plan view showing a thrust foil bearing according to a third embodiment of the present disclosure.
FIG. 8 is a view of B-B shown in FIG. 7.
FIG. 9 is a plan view showing a thrust foil bearing according to a fourth embodiment of the present disclosure.
FIG. 10 is a view of C-C shown in FIG. 9.
FIG. 11 is a cross-sectional view showing a thrust foil bearing according to a modified example of the fourth embodiment of the present disclosure.

### [Description of Embodiments]

Hereinafter, a thrust foil bearing of the present disclosure will be described in detail with reference to the drawings.

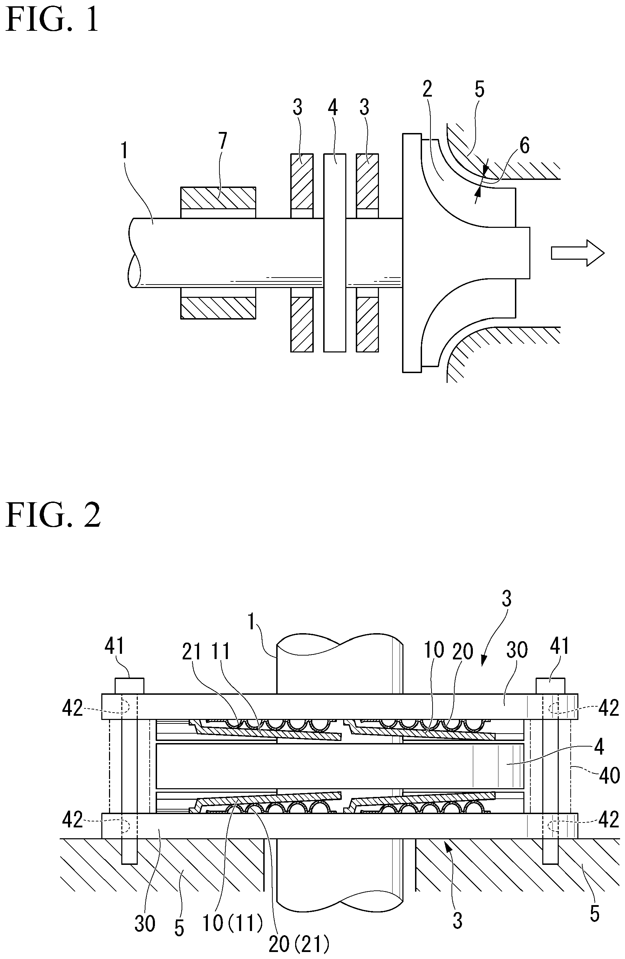

FIG. 1 is a side view showing an example of a turbomachine to which the thrust foil bearing of the present disclosure is applied. In FIG. 1, reference numeral 1 denotes a rotation shaft (i.e., shaft), reference numeral 2 denotes an impeller provided in a distal end portion of the rotation shaft, and reference numeral 3 denotes a thrust foil bearing according to the present disclosure.

A disk-shaped thrust collar 4 is attached to the rotation shaft 1. The thrust collar 4 is sandwiched between a pair of thrust foil bearings 3. The impeller 2 is disposed inside a housing 5 on a stationary side and has a tip clearance 6 between the housing 5 and the impeller 2. That is, the impeller 2 is disposed inside the housing 5 to form the tip clearance 6 between the impeller 2 and the housing 5. The rotation shaft 1 is supported by a radial foil bearing 7.

FIG. 2 is a side view showing thrust foil bearings 3 of the present disclosure. The thrust foil bearings 3 are formed in a pair on both sides of the thrust collar 4 as shown in FIG. 2. That is, as the thrust foil bearings 3, the pair of thrust foil bearings 3 provided on both sides of the thrust collar 4 are provided with the thrust collar 4 interposed therebetween. The pair of thrust foil bearings 3 have the same configuration. The thrust foil bearings 3 include a top foil 10, a back foil 20, and a base plate 30. That is, each of the pair of thrust foil bearings 3 includes the top foil 10, the back foil 20, and the base plate 30.

A cylindrical bearing spacer 40 indicated by a two-dotted chain line is sandwiched between the base plates 30 of the pair of thrust foil bearings 3. That is, the cylindrical bearing spacer 40 indicated by a two-dotted chain line is sandwiched between the pair of base plates 30 provided by the pair of thrust foil bearings 3. Then, these base plates 30 are connected to each other through the bearing spacer 40 by a fastening bolt 41. A through-hole 42 through which the fastening bolt 41 is inserted is formed in an outer peripheral portion of the base plate 30. Additionally, one of the base plates 30 connected in this way comes into contact with the housing 5 while fastened by the fastening bolt 41.

### (First embodiment)

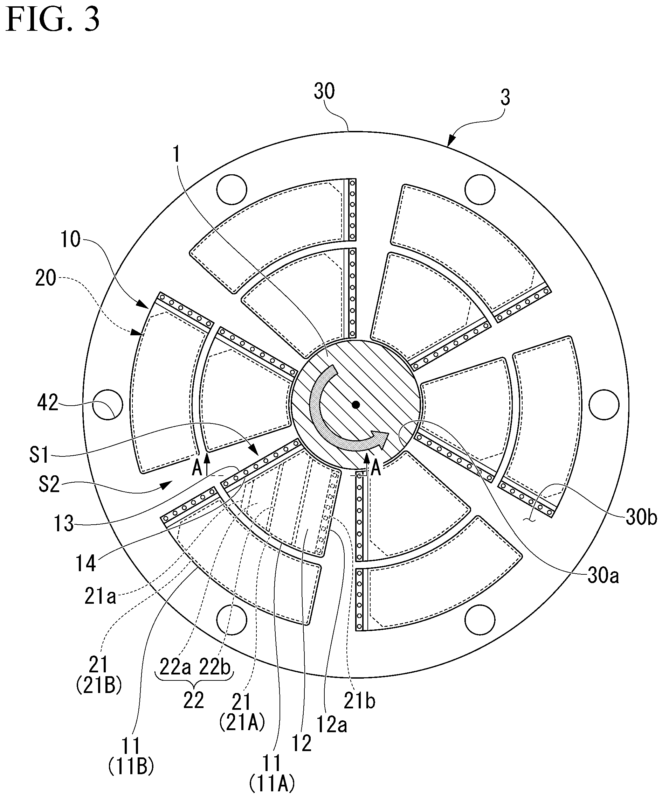

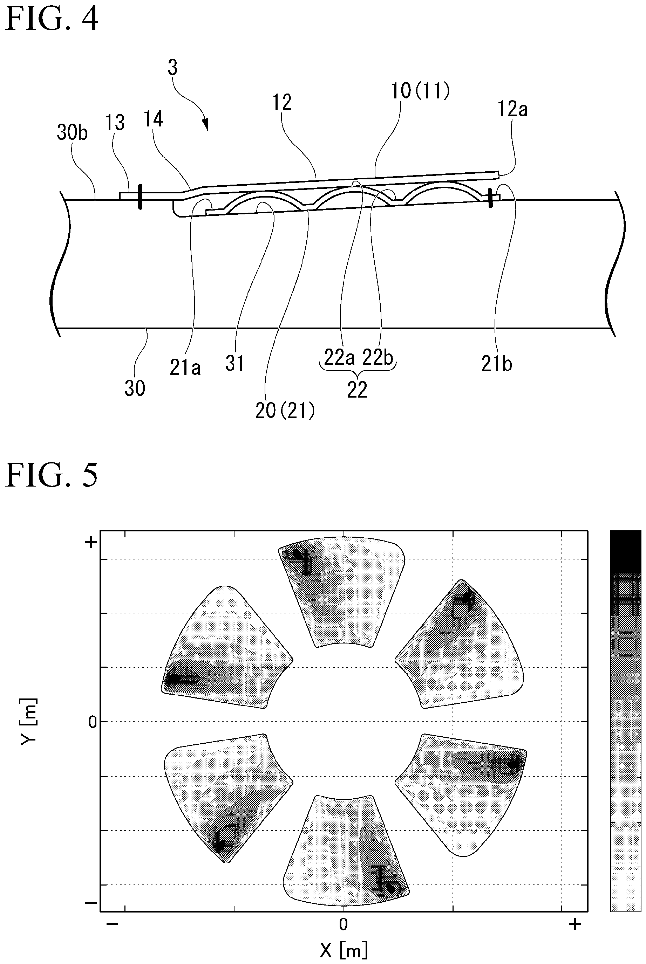

FIG. 3 is a plan view showing the thrust foil bearing 3 according to the first embodiment of the present disclosure. FIG. 4 is a view of A-A shown in FIG. 3. The base plate 30 includes, as shown in FIG. 3, an insertion hole 30a through which the rotation shaft 1 is inserted.

Additionally, in the following description, the positional relationship of each member may be described with reference to the insertion hole 30a. Specifically, "axial direction" means a direction in which the insertion hole 30a extends (i.e., a direction through which the rotation shaft 1 is inserted). Further, "radial direction" means the radial direction of the insertion hole 30a. Further, "circumferential direction" means the circumferential direction along the inner peripheral surface of the insertion hole 30a. Alternatively, these directions can be referred to as the "radial direction" and the "circumferential direction" when viewed from an axis of the rotation shaft 1 inserted through the insertion hole 30a based on the axis.

The base plate 30 constitutes the outermost portion (i.e., the side of the counter-thrust collar 4) of the thrust foil bearing 3 in the axial direction. That is, the side of the counter-thrust collar 4 of the thrust foil bearing 3 in the axial direction is a portion located on the side opposite to a portion closest to the thrust collar 4, that is, a portion farthest from the thrust collar 4 in each thrust foil bearing 3 in the axial direction. The insertion hole 30a is formed in the base plate 30. That is, the base plate 30 of the present disclosure is a disk-shaped member provided with the insertion hole 30a. However, the base plate 30 may be a member with a shape other than a disk shape (for example, a rectangular plate shape) as long as the insertion hole 30a is provided. Further, the insertion hole 30a does not necessarily have to have a strict cylindrical shape.

The base plate 30 is formed by, for example, a metal plate having a thickness of about several millimeters. The top foil 10 and the back foil 20 are disposed in the periphery of the insertion hole 30a (i.e., opening) of a flat surface 30b of the base plate 30 disposed to face the thrust collar 4. Specifically, the top foil 10 is supported by the back foil 20, and the back foil 20 is supported by the base plate 30. That is, the top foil 10 is also supported by the base plate 30 with the back foil 20 interposed therebetween.

The top foil 10 is formed by a plurality of thin metal plates (i.e., top foil pieces 11) arranged around the insertion hole 30a. The top foil pieces 11 include inclined portions 12 which are inclined upward (i.e., the front side of the paper in FIG. 3, that is, the direction toward the front side of the paper, or the axial direction side in the direction from the base plate 30 toward the top foil piece 11, that is, the direction from the base plate 30 toward the top foil piece 11 in the axial direction) from one side in the circumferential direction (i.e., the upstream side in the rotation direction of the rotation shaft 1) to the other side in the circumferential direction (i.e., the downstream side in the rotation direction of the rotation shaft 1), and attachment portions 13 which are continuously provided at one side of the inclined portions 12 in the circumferential direction and are attached to the base plate 30.

As shown in FIG. 3, the inclined portions 12 are formed in substantially trapezoidal shapes in which apex sides of the fan shapes are cut out and the inner peripheral sides and the outer peripheral sides are each arcuate. That is, the inclined portions 12 each include two edges which are separated from each other in the circumferential direction and extend from the inner peripheral side to the outer peripheral side, an inner peripheral edge which connects two edges on the inner peripheral side, and an outer peripheral edge which connects two edges on the outer peripheral side. The edge extending from the inner peripheral side to the outer peripheral side on the other side of the inclined portion 12 in the circumferential direction (hereinafter referred to as an end portion 12a on the other side in the circumferential direction) is a free end.

Meanwhile, an edge extending from the inner peripheral side to the outer peripheral side on one side of each of the inclined portions 12 in the circumferential direction is connected to the attachment portion 13 through a bent portion 14. As shown in FIG. 4, the bent portion 14 includes a first bend and a second bend located on the other side of the first bend in the circumferential direction. The first bend may also be called a first bend portion, and the second bend may also be called a second bend portion. The first bend is bent toward the back surface side of the surface facing the base plate 30 in the top foil piece 11. The second bend is bent toward the surface side facing the base plate 30 in the top foil piece 11. That is, the bent portion 14 has a step shape. Additionally, both the first bend and the second bend have an obtuse angle.

The inclined portion 12 which is located on the other side in the circumferential direction in relation to the bent portion 14 is supported by a support portion 22 of a back foil piece 21. The inclined portion 12 which is supported by the support portion 22 is disposed to be inclined at an initial inclination angle while gradually moving away from the base plate 30 as it goes from one side in the circumferential direction to the other side in the circumferential direction. Here, the initial inclination angle is the inclination angle of the top foil piece 11 with respect to the base plate 30 when a load is zero. That is, the initial inclination angle is an angle formed between the base plate 30 and the top foil piece 11 when a load is zero. The base plate 30 of the present disclosure includes a flat surface 30b which spreads in a direction orthogonal to the axial direction, and the inclined portion 12 is inclined with respect to the flat surface 30b.

The attachment portion 13 is connected to one side (i.e., the first bend side) of the bent portion 14 in the circumferential direction. That is, the extension portion 13 is connected to the bent portion 14 through the end portion on one side (i.e., the first bend side) in the circumferential direction. In the present disclosure, the attachment portion 13 is formed in a strip shape to have the same length as the bent portion 14 in the radial direction and is spot-welded (i.e., dot-welded) to the base plate 30. That is, this welding position is the attachment position of the top foil piece 11 with respect to the base plate 30. Additionally, the top foil piece 11 can be attached to the base plate 30 by, for example, screw-fixing or the like instead of spot-welding. Further, the attachment portion 13 and the bent portion 14 do not necessarily need to have the same length in the radial direction.

Meanwhile, the back foil 20 is formed by a plurality of thin metal plates (i.e., back foil pieces 21) arranged around the insertion hole 30a. The back foil pieces 21 include the support portions 22 which support the inclined portions 12 of the top foil pieces 11. As shown in FIG. 4, the support portions 22 are corrugated foil (bump foil) in which peak portions 22a and valley portions 22b are alternately formed. The support portions 22 elastically support the inclined portions 12 of the top foil pieces 11.

Additionally, for example, a bump foil, a spring foil described in Japanese Unexamined Patent Application No. 2006-57652 or Japanese Unexamined Patent Application No. 2004-270904, a back foil described in Japanese Unexamined Patent Application No. 2009-299748, or the like can be used as the support portions 22. Further, a spring foil described in Japanese Unexamined Patent Application No. 2006-57652 or Japanese Unexamined Patent Application No. 2004-270904 and a back foil described in Japanese Unexamined Patent Application No. 2009-299748 are foils used in a radial bearing, but when these are developed in a plane and formed in an annular plate shape, the foil (support portions 22) used for the thrust foil bearing 3 is obtained.

The support portions 22 of the present disclosure are formed by a bump foil. In the plan view shown in FIG. 3, the support portions 22 are formed to be much smaller than the inclined portions 12 of the top foil pieces 11. Thus, the support portions 22 are covered by the inclined portions 12. Similarly to the inclined portions 12, the support portions 22 are formed in substantially trapezoidal shapes in which the apex sides of the fan shapes are cut out, and the inner peripheral sides and the outer peripheral sides are each arcuate. That is, each of the support portions 22 includes two edges which are separated from each other in the circumferential direction and extend from the inner peripheral side to the outer peripheral side, an inner peripheral edge which connects two edges on the inner peripheral side, and an outer peripheral edge which connects two edges on the outer peripheral side.

Edges (hereinafter referred to as end portions on one side in the circumferential direction) extending from the inner peripheral side to the outer peripheral side on one side of the support portions 22 in the circumferential direction are provided with parallel portions (hereinafter referred to as back foil end portions 21a) extending in parallel to edges (hereinafter referred to as end portions on the other side in the circumferential direction) extending from the inner peripheral side to the outer peripheral side on the other side of the support portions 22 in the circumferential direction. In the support portions 22, the valley portions 22b and the peak portions 22a are alternately connected in a first direction directed from the back foil end portions 21a to end portions on the other side of the support portions 22 in the circumferential direction. That is, the valley portions 22b and the peak portions 22a are alternately connected in the normal direction (also referred to as the direction orthogonal to the ridges of the peak portions 22a) orthogonal to the other end portions of the back foil end portions 21a to the support portions 22 in the circumferential direction.

As shown in FIG. 4, the valley portions 22b have flat surfaces and face the base plate 30. Further, the peak portions 22a are arch-shaped portions which connect the adjacent valley portions 22b. The back foil pieces 21 are supported by the base plate 30. Therefore, the valley portions 22b can abut the base plate 30. Both end portions of the support portions 22, that is, the back foil end portions 21a and end portions (hereinafter referred to as attachment portions 21b) on the other side of the support portions 22 in the circumferential direction are formed by the valley portions 22b.

In the present disclosure, the valley portions 22b and the peak portions 22a are formed at substantially equal pitches. Further, the height of the peak portions 22a (i.e., a difference in height between the valley portions 22b and the peak portions 22a) is set to a constant height. The base plate 30 is provided with a support surface 31 which supports the support portions 22. The support surface 31 is formed as an inclined surface which gradually becomes higher as it goes toward the other side (i.e., the right side of the paper in FIG. 4).in the first direction. Additionally, in the present disclosure, the other side in the first direction and the other side in the circumferential direction are not the same, but an angle between them is a minor angle. The support surface 31 is inclined at a predetermined angle with respect to the flat surface 30b of the base plate 30. This angle corresponds to the initial inclination angle of the inclined portions 12 of the top foil piece 11.

The attachment portion 21b of the back foil piece 21 is spot-welded (i.e., dot-welded) to the base plate 30. That is, this welding position is the attachment position of the back foil piece 21 with respect to the base plate 30. That is, in the present disclosure, the attachment position of the back foil piece 21 is the valley portion 22b (i.e., the attachment portion 21b) which is located at the end on the other side (i.e., the right side of the paper in FIG. 4) of the first direction.

Further, the valley portion 22b (i.e., the back foil end portion 21a) located at the end on one side (i.e., the left side of the paper in FIG. 4) of the back foil piece 21 in the first direction is a free end. That is, when a load acts on the back foil piece 21, the back foil end portion 21a can move toward one side of the first direction. Additionally, the back foil piece 21 can be attached to the base plate 30 by, for example, screw-fixing or the like other than the spot-welding.

As shown in FIG. 3, the top foil piece 11 and the back foil piece 21 with the above-described conjuration are arranged in a multiple ring shape around the insertion hole 30a. The base plate 30 of the present disclosure supports six top foil pieces 11 and six back foil pieces 21 on the inside of the radial direction and supports six top foil pieces 11 and six back foil pieces 21 on the outside of the radial direction. In the present disclosure, six top foil pieces 11 on the inner peripheral side are respectively separated from six top foil pieces 11 on the outer peripheral side. Further, six back foil pieces 21 on the inner peripheral side are also respectively separated from six back foil pieces 21 on the outer peripheral side. That is, the base plate 30 is exposed at a position between the adjacent top foil pieces 11 on the inner and outer peripheral sides and a position between the adjacent top foil pieces 11 in the circumferential direction. That is, the same number of the top foil pieces 11 and the back foil pieces 21 of the present disclosure are arranged in a double ring shape while being separated from each other in the radial direction.

An inner peripheral top foil piece 11A disposed on the inside of the radial direction is supported by an inner peripheral back foil piece 21A disposed on the inside of the same radial direction. Further, an outer peripheral top foil piece 11B disposed on the outside of the radial direction is supported by an outer peripheral back foil piece 21B disposed on the outside of the same radial direction. In the present disclosure, dimensions of the outer peripheral top foil piece 11B in the radial direction are smaller than dimensions of the inner peripheral top foil piece 11A in the radial direction. Additionally, the dimensions of the outer peripheral top foil piece 11B in the radial direction may not necessarily be smaller than the dimensions of the inner peripheral top foil piece 11A in the radial direction. Meanwhile, the dimensions (i.e., the dimensions of the outermost periphery) of the outer peripheral top foil piece 11B in the circumferential direction are larger than the dimensions (i.e., the dimensions of the outermost periphery) of the inner peripheral top foil piece 11A in the circumferential direction. The inner peripheral top foil piece 11A of the present disclosure and the outer peripheral top foil piece 11B located on the outer peripheral side of the inner peripheral top foil piece 11A extend by substantially the same angle range around the insertion hole 30a.

An inner peripheral circumferential gap S1 extending in the radial direction is formed between the inner peripheral top foil pieces 11A adjacent to each other in the circumferential direction. Further, an outer peripheral circumferential gap S2 extending in the radial direction is formed between the outer peripheral top foil pieces 11B adjacent to each other in the circumferential direction. As shown in FIG. 3, the inner peripheral circumferential gap S1 is located at a circumferential position matching the outer peripheral circumferential gap S2. That is, the inner peripheral circumferential gap S1 communicates with the outer peripheral circumferential gap S2 in the radial direction. That is, arrangement pitches (i.e., arrangement angles) of the inner peripheral top foil piece 11A and the outer peripheral top foil piece 11B in the circumferential direction are equal to each other.

Next, the action of the thrust foil bearing 3 including the base plate 30 with such a configuration will be described. As shown in FIG. 2, the thrust foil bearing 3 is provided on both sides of the thrust collar 4. Therefore, it is possible to suppress the movement of the rotation shaft 1 on both sides in the thrust direction.

When the rotation shaft 1 rotates in such a state and the thrust collar 4 starts to rotate, the thrust collar 4 and the top foil piece 11 rub against each other, and the surrounding fluid is pushed into a wedge-shaped space formed between them. Then, when the thrust collar 4 reaches a certain rotation speed, a fluid lubricating film is formed between them. Due to the pressure of the fluid lubricating film, the top foil piece 11 is pressed against the back foil piece 21, and the thrust collar 4 escapes from the contact state with the top foil piece 11 and rotates in a non-contact state.

Here, the top foil pieces 11 of the present disclosure are arranged in a multiple ring shape around the insertion hole 30a as shown in Fig. 3. Therefore, the number of the top foil pieces 11 increases compared to the conventional one (i.e., six in the arrangement of the conventional one and twelve in the arrangement of the present disclosure). Since the individual top foil piece 11 exhibits the load capacity as in the conventional art, the thrust foil bearing 3 can support a larger load capacity as a whole.

Further, according to this configuration, the thrust foil bearing 3 can be enlarged without enlarging the top foil piece 11. That is, when the diameter of the thrust foil bearing 3 is increased in order to improve the load capacity of the thrust foil bearing, the size of the top foil piece 11 generally also increases. However, when the size of the top foil piece 11 increases, it is difficult to appropriately distribute the rigidity of the top foil piece 11 (i.e., a combination of the flexural rigidity of the top foil piece 11 and the support rigidity of the back foil piece 21). Since the fluid lubricating film is extremely thin, the bearing surface (i.e., the top foil piece 11) may be distorted when the rigidity of the top foil piece 11 is not appropriately distributed, and the fluid lubricating film may be easily broken. Meanwhile, as shown in FIG. 3, when the top foil piece 11 is subdivided and arranged in a multiple ring shape, the top foil piece 11 having the same size as the conventional one can be used, and an increase in size of the thrust foil bearing 3 can be easily handled.

Thus, according to the above-described first embodiment, it is possible to improve the load capacity of the thrust foil bearing 3 by adopting a configuration including the base plate 30 that includes the insertion hole 30a through which the rotation shaft 1 is inserted and the top foil 10 that is disposed around the insertion hole 30a and in which the top foil 10 includes the plurality of top foil pieces 11 arranged in a multiple ring shape around the insertion hole 30a.

### (Second embodiment)

Next, a second embodiment of the present disclosure will be described. In the following description, the same or equivalent configurations as those in the above-described embodiment are designated by the same reference numerals, and the description thereof will be simplified or omitted.

FIG. 5 is an analysis diagram showing a pressure distribution of fluid lubricating films acting on top foil pieces that are not arranged in a multiple ring shape. In FIG. 5, the level of pressure is indicated by the shade of dots. Since a downstream end side (i.e., the downstream side of the rotation direction of the rotation shaft, the other side of the circumferential direction) of the top foil piece is the narrowest part of the wedge-shaped space, a high pressure caused by the fluid lubricating film acts as shown in FIG. 5. Additionally, a high pressure caused by the fluid lubricating film acts on the outer peripheral side of the top foil piece in FIG. 5, but the position can be changed in the radial direction depending on the support rigidity of the bump foil piece. However, since the circumferential speed of the thrust collar is fast on the outer peripheral side of the top foil piece compared to the inner peripheral side thereof, a high pressure caused by the fluid lubricating film tends to act on the outer peripheral side of the top foil piece.

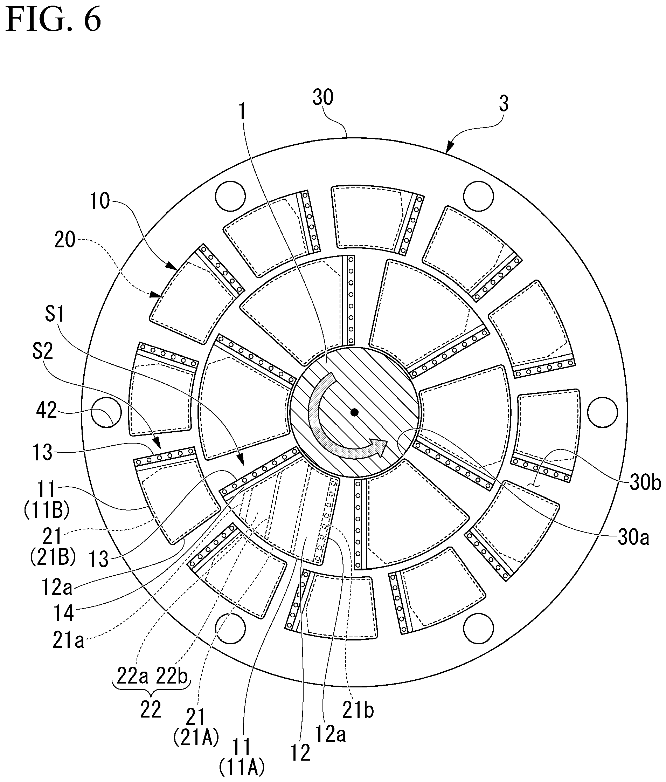

FIG. 6 is a plan view showing the thrust foil bearing 3 according to the second embodiment of the present disclosure. In the second embodiment, as described above, the outer peripheral top foil piece 11B (and the outer peripheral back foil piece 21B) disposed on the outer peripheral side where a high pressure caused by the fluid lubricating film is likely to act is subdivided in the circumferential direction, and the number of the outer peripheral top foil pieces 11B is set to be larger than the number of the inner peripheral top foil pieces 11A. Twelve outer peripheral top foil pieces 11B shown in FIG. 6 are arranged with respect to six inner peripheral top foil pieces 11A.

In the example shown in FIG. 6, the dimensions of the outer peripheral top foil piece 11B in the radial direction are smaller than the dimensions of the inner peripheral top foil piece 11A in the radial direction. Further, the dimensions (i.e., the dimensions of the outermost periphery) of the outer peripheral top foil piece 11B in the circumferential direction are also smaller than the dimensions (i.e., the dimensions of the outermost periphery) of the inner peripheral top foil piece 11A in the circumferential direction. Additionally, in order to form an appropriate fluid lubricating film on the subdivided outer peripheral top foil pieces 11B, the circumferential length and the radial length of the outer peripheral top foil piece 11B may be set to be substantially the same. That is, the length obtained by dividing the circumferential length (equivalent to the circumferential length from the outermost periphery of the thrust collar 4 to the inner peripheral surface of the bearing spacer 40) of the outermost periphery of the bearing into about 12 may be defined as the circumferential length of the outer peripheral top foil piece 11B, and the radial length of the outer peripheral top foil piece 11B may be set to be substantially the same as this.

As shown in FIG. 6, the inner peripheral circumferential gap S1 is disposed at a circumferential position between both ends (indicated by reference numerals 13 and 12a) of the outer peripheral top foil piece 11B in the circumferential direction. That is, the outer peripheral top foil piece 11B is disposed to face the inner peripheral circumferential gap S1 in the radial direction. Accordingly, a T-shaped gap is formed on the outside of the inner peripheral circumferential gap S1 in the radial direction in a plan view shown in FIG. 6. That is, the inner peripheral circumferential gap S1 does not communicate with the outer peripheral circumferential gap S2 on the same line in the radial direction. That is, in the second embodiment, there is provided the outer peripheral top foil piece 11B which faces (the inner peripheral edge of) the inner peripheral circumferential gap S1 on the outside of the radial direction to correspond to each inner peripheral circumferential gap S1. Further, some of (the inner peripheral edges of) the outer peripheral top foil pieces 11B do not face the inner peripheral circumferential gap S1 on the inside of the radial direction.

According to the second embodiment of the above-described configuration, since the number of the outer peripheral top foil pieces 11B is larger than the number of the inner peripheral top foil pieces 11A, it is possible to improve the load capacity per unit area of the thrust foil bearing 3. That is, as shown in FIG. 5, a high pressure caused by the fluid lubricating film is generated on the outer peripheral side. Further, since this high pressure is generated on the downstream end side of the top foil piece 11, it can be said that an upper end side of the top foil piece 11 does not contribute to the load capacity from the reverse viewpoint. Therefore, it is possible to improve the load capacity per unit area of the thrust foil bearing 3 by subdividing the outer peripheral top foil piece 11B in the circumferential direction without extending the outer peripheral top foil piece in the circumferential direction and by increasing the total area of the downstream end side of the outer peripheral top foil piece 11B effectively used to improve the load capacity.

Further, in the second embodiment, the inner peripheral circumferential gap S1 extending in the radial direction is formed between each of the inner peripheral top foil pieces 11A adjacent to each other in the circumferential direction of the insertion hole 30a, and the inner peripheral circumferential gap S1 is disposed at the circumferential position between both ends of the outer peripheral top foil piece 11B in the circumferential direction. Therefore, the outer peripheral top foil piece 11B can support the load at the circumferential position of the region (i.e., the inner peripheral circumferential gap S1) not supported in the inner peripheral top foil piece 11A.

### (Third embodiment)

Next, a third embodiment of the present disclosure will be described. In the following description, the same or equivalent configurations as those in the above-described embodiment are designated by the same reference numerals, and the description thereof will be simplified or omitted.

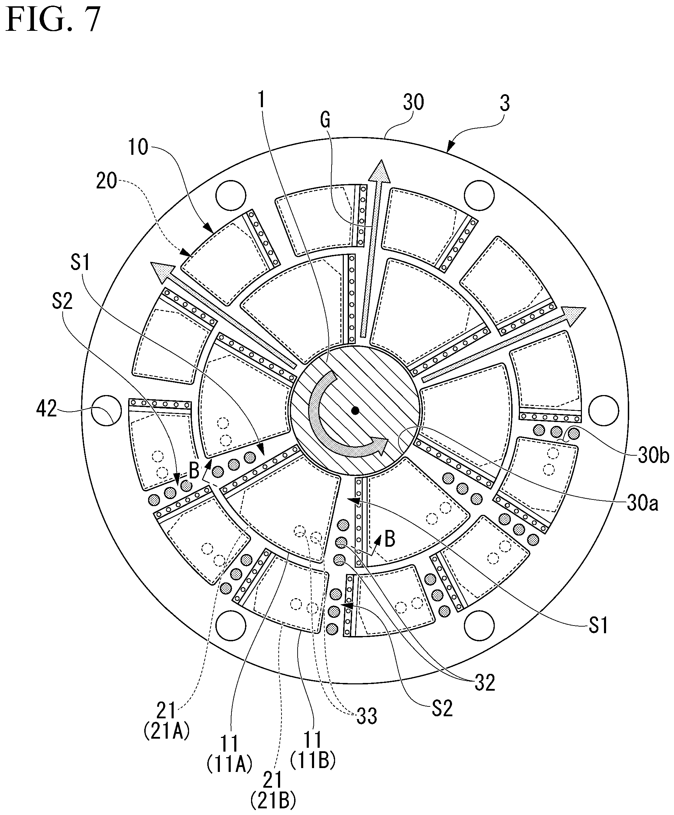

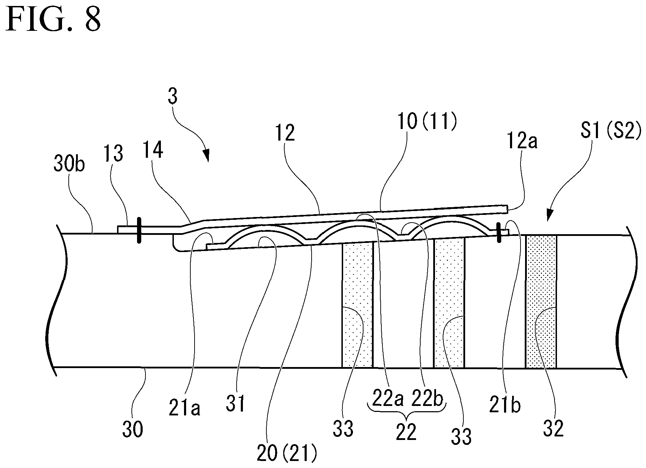

FIG. 7 is a plan view showing the thrust foil bearing 3 according to the third embodiment of the present disclosure. FIG. 8 is a view of B-B shown in FIG. 7. As shown in FIG. 7, in the third embodiment, the number of the outer peripheral top foil pieces 11B is larger than the number of the inner peripheral top foil pieces 11A, and at least one outer peripheral circumferential gap S2 is located at a circumferential position matching the inner peripheral circumferential gap S1.

Twelve outer peripheral top foil pieces 11B of the third embodiment are arranged with respect to six inner peripheral top foil pieces 11A. Twelve outer peripheral circumferential gaps S2 are formed by these outer peripheral top foil pieces 11B. Among these, six outer peripheral circumferential gaps S2 are located at the circumferential positions matching the inner peripheral circumferential gaps S1. The remaining six outer peripheral circumferential gaps S2 are arranged at the circumferential positions between both ends of the inner peripheral top foil pieces 11A in the circumferential direction. That is, the outer peripheral circumferential gap S2 communicating with the inner peripheral circumferential gap S1 in the radial direction and the outer peripheral circumferential gap S2 not communicating with the inner peripheral circumferential gap S1 in the radial direction are alternately arranged in the circumferential direction.

An arrow indicated by reference numeral G of FIG. 7 shows the flow of a cooling gas. The cooling gas is introduced into a gap between the rotation shaft 1 and the insertion hole 30a of the base plate 30, flows outward in the radial direction from the gap, and cools the top foil 10 and the back foil 20. The inner peripheral circumferential gap S1 and the outer peripheral circumferential gap S2 are provided with a cooling hole 32 for which this cooling gas is separately blown out. The plurality of cooling hole 32 are formed at intervals in the radial direction to face from the outer peripheral side toward the inner peripheral side in each of the inner peripheral circumferential gap S1 and the outer peripheral circumferential gap S2.

Further, as shown in FIG. 8, a cooling hole 33 for which a cooling gas is blown out is formed in the support surface 31 on which the top foil piece 11 and the back foil piece 21 are disposed. The cooling hole 33 faces a back surface (i.e., ungrounded region) of the peak portion 22a of the back foil piece 21. The cooling hole 33 is formed at a plurality of positions at intervals in the first direction to face the back surface of each of the peak portion 22a located at an end on the other side (i.e., the right side of the paper in FIG. 8) of the first direction and the peak portion 22a adjacent to that peak portion 22a.

According to the third embodiment of the above-described configuration, since at least one outer peripheral circumferential gap S2 is located at a circumferential position matching the inner peripheral circumferential gap S1 as shown in FIG. 7, a cooling gas introduced from the insertion hole 30a is likely to reach the outer peripheral top foil piece 11B through the outer peripheral circumferential gap S2 communicating with the inner peripheral circumferential gap S1. Since the circumferential speed of the thrust collar 4 on the outer peripheral side is faster than that on the inner peripheral side, the heat generation amount is large on the outer peripheral side. However, since the cooling gas reaches the outer peripheral side and the temperature rise, particularly on the downstream end side of the outer peripheral top foil piece 11B, is suppressed, a larger load can be supported. Further, since the cooling holes 32 and 33 are provided in an arbitrary position of the base plate 30 and the cooling gas is blown out thereto, it is possible to efficiently cool a portion where the temperature tends to rise.

### (Fourth embodiment)

Next, a fourth embodiment of the present disclosure will be described. In the following description, the same or equivalent configurations as those in the above-described embodiment are designated by the same reference numerals, and the description thereof will be simplified or omitted.

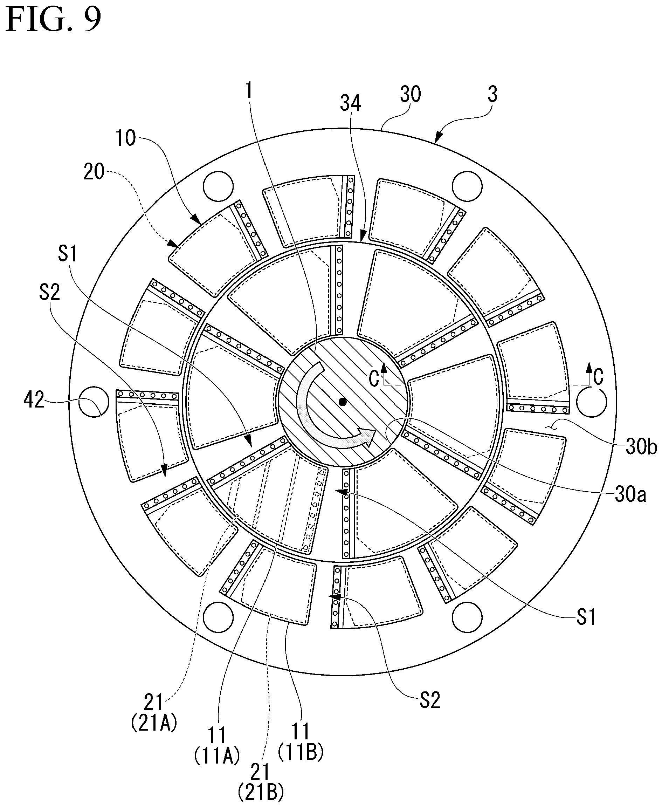

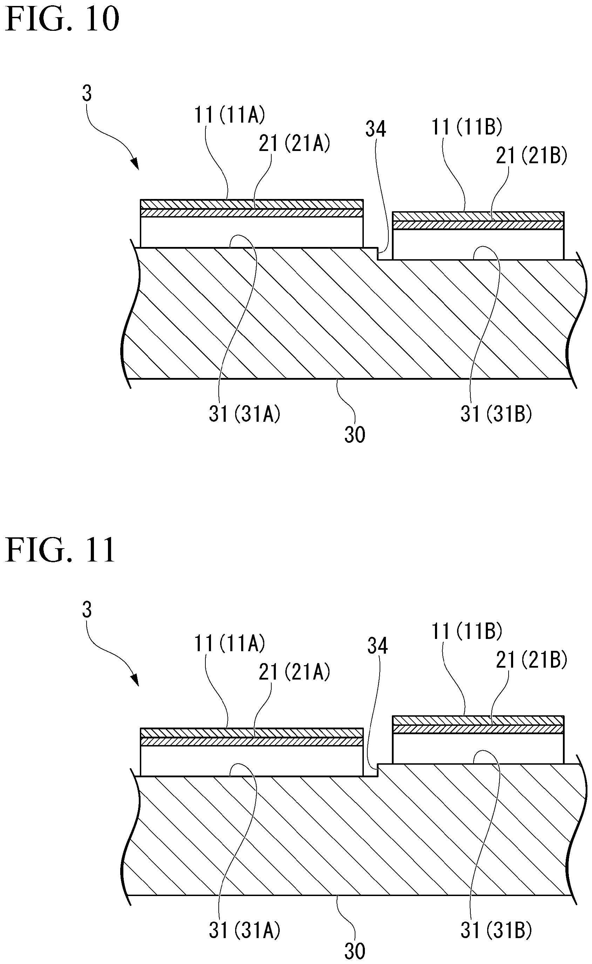

FIG. 9 is a plan view showing the thrust foil bearing 3 according to the fourth embodiment of the present disclosure. FIG. 10 is a view of C-C shown in FIG. 9. As shown in FIG. 10, in the third embodiment, a step 34 is provided between a support surface 31A on the inner peripheral side of the base plate 30 on which the inner peripheral top foil piece 11A is disposed and a support surface 31B on the outer peripheral side of the base plate 30 on which the outer peripheral top foil piece 11B is disposed. Additionally, since the arrangement of the top foil piece 11 and the back foil piece 21 shown in FIG. 9 is the same as the arrangement shown in FIG. 7 described above, the description is omitted.

As shown in FIG. 10, the support surface 31A on the inner peripheral side is higher than the support surface 31B on the outer peripheral side. That is, the inner peripheral top foil piece 11A which is supported by the support surface 31A on the inner peripheral side through the inner peripheral back foil piece 21A is closer to the thrust collar 4 than the outer peripheral top foil piece 11B. Therefore, when the thrust collar 4 rotates at a low load, the inner peripheral top foil piece 11A forms a fluid lubricating film before the outer peripheral top foil piece 11B. Thus, according to this configuration, it is possible to reduce a load applied to the outer peripheral top foil piece 11B when the thrust collar 4 rotates at a low load. Further, the loss generated in the outer peripheral top foil piece 11B can also be reduced in connection with the reduction of this load. According to such a fourth embodiment, the bearing loss of the thrust foil bearing 3 as a whole can be reduced when the thrust collar 4 repeats low-load rotation.

Further, a modified example shown in FIG. 11 can be adopted in the fourth embodiment. FIG. 11 is a cross-sectional view showing the thrust foil bearing 3 according to a modified example of the fourth embodiment of the present disclosure. Additionally, FIG. 11 corresponds to the cross-section C-C of FIG. 9 described above. As shown in FIG. 11, the support surface 31B on the outer peripheral side may be higher than the support surface 31A on the inner peripheral side. That is, the outer peripheral top foil piece 11B may be closer to the thrust collar 4 than the inner peripheral back foil piece 21A.

According to this configuration, the outer peripheral top foil piece 11B forms a fluid lubricating film before the inner peripheral top foil piece 11A during the rotation of the thrust collar 4. Then, when the bearing load increases during high-load rotation of the thrust collar 4, the outer peripheral top foil piece 11B is pressed against the base plate 30, and the inner peripheral top foil piece 11A supports the bearing loss from back. Since the circumferential speed around the thrust collar 4 is slow and the bearing area is small in the inner peripheral top foil piece 11A, it can be said that seizure is more likely to occur than the outer peripheral top foil piece 11B when the support surface 31A and the support surface 31B have the same height. However, since the inner peripheral top foil piece 11A supports the bearing load from back, the load on the inner peripheral top foil piece 11A is reduced by that amount. Accordingly, the seizure of the inner peripheral top foil piece 11A can be delayed, and the limit load capacity of the thrust foil bearing 3 becomes high as a whole. Thus, according to the modified example of the fourth embodiment, the limit load capacity of the entire thrust foil bearing 3 can be improved when the thrust collar 4 repeats high-load rotation.

As described above, an embodiment of the present disclosure has been described with reference to the drawings, but the present disclosure is not limited to the above-described embodiment. Various shapes and combinations of the constituent members shown in the above-described embodiment are examples and can be variously changed based on the design requirements and the like without departing from the spirit of the present disclosure.

For example, in the above-described embodiment, a configuration in which the top foil piece 11 is arranged in a double ring shape around the insertion hole 30a has been described, but the top foil piece 11 may be arranged in a triple ring shape, a quadruple ring shape, or a multiple ring shape.

### [Industrial Applicability]

According to the present disclosure, it is possible to improve a load capacity of a thrust foil bearing.

### [Reference Signs List]

- 1: Rotation shaft (i.e., shaft)
- 3: Thrust foil bearing
- 10: Top foil
- 11: Top foil piece
- 11A: Inner peripheral top foil piece
- 11B: Outer peripheral top foil piece
- 12: Inclined portion
- 12a: End portion
- 13: Attachment portion
- 14: Bent portion
- 20: Back foil
- 21: Back foil piece
- 21a: Back foil end portion
- 21b: Attachment portion
- 21A: Inner peripheral back foil piece
- 21B: Outer peripheral back foil piece
- 22: Support portion
- 22a: Peak portion
- 22b: Valley portion
- 30: Base plate
- 30a: Insertion hole
- 30b: Flat surface
- 31: Support surface
- 31A: Support surface
- 31B: Support surface
- 32: Cooling hole
- 33: Cooling hole
- 34: Step
- S1: Inner peripheral circumferential gap
- S2: Outer peripheral circumferential gap

## Claims

1. A thrust foil bearing comprising:
a base plate provided with an insertion hole through which a shaft is inserted; and
a top foil disposed around the insertion hole,
wherein the top foil includes a plurality of top foil pieces arranged in multiple ring shapes around the insertion hole.

2. The thrust foil bearing according to claim 1, wherein,
the number of outer peripheral top foil pieces among the plurality of top foil pieces is larger than the number of inner peripheral top foil pieces among the plurality of top foil pieces, the outer peripheral top foil pieces arranged on an outer peripheral side in a radial direction of the insertion hole, and the inner peripheral top foil pieces arranged on an inner peripheral side in the radial direction of the insertion hole.

3. The thrust foil bearing according to claim 1 or 2, wherein,
an inner peripheral circumferential gap extending in the radial direction is formed between each of the inner peripheral top foil pieces among the plurality of top foil pieces, the inner peripheral top foil pieces arranged on the inner peripheral side in the radial direction of the insertion hole, and
at least one inner peripheral circumferential gap is disposed at a circumferential position between both ends of the outer peripheral top foil piece disposed on the outer peripheral side, the both ends in a circumferential direction of the insertion hole.

4. The thrust foil bearing according to any one of claims 1 to 3, wherein,
the inner peripheral circumferential gap extending in the radial direction is formed between each of the inner peripheral top foil pieces among the plurality of top foil pieces, the inner peripheral top foil pieces arranged on the inner peripheral side in the radial direction of the insertion hole, and
the outer peripheral circumferential gap extending in the radial direction is formed between each of the outer peripheral top foil pieces among the plurality of top foil pieces, the outer peripheral top foil pieces arranged on the outer peripheral side in the radial direction of the insertion hole, and
at least one outer peripheral circumferential gap is located at a circumferential position matching the inner peripheral circumferential gap.

5. The thrust foil bearing according to any one of claims 1 to 4, wherein
a step is provided between
a support surface on the outer peripheral side of the base plate and on which the outer peripheral top foil pieces among the plurality of top foil pieces are disposed, the outer peripheral top foil pieces disposed on the outer peripheral side in the radial direction of the insertion hole, and
a support surface on the inner peripheral side of the base plate and on which the inner peripheral top foil pieces among the plurality of top foil pieces are disposed, the inner peripheral top foil pieces disposed on the inner peripheral side in the radial direction of the insertion hole.
